# EUROPEAN PATENT APPLICATION

(11) **EP 2 848 569 A1**
(43) Date of publication of application: **18.03.2015**
(21) Application number: 13184558.8
(22) Date of filing: 16.09.2013
(51) Int. Cl.: B66B 1/46

(54) **Electric lock arrangement**

(71) Applicant: Kone Corporation, 00330 Helsinki (FI)
(72) Inventor: Mäkinen, Pertti, 05840 Hyvinkää (FI); Silvennoinen, Henry, 00620 Helsinki (FI); Vuorenala, Jere, 21420 Lieto (FI)
(74) Representative: Papula Oy

(57) **Abstract**

An elevator can be called in advance when a person opens a door (10) in the vicinity of the elevator and he or she is expected to use the elevator after opening the door (10). When the lock (11) of the door is an offline lock and does not have data communication connection other than the communication with a key, a mobile device (12) can be used for communicating with an access control system (14). The mobile device (12)can communicate directly with the lock (11). Instead of direct communication the mobile device (12) can also communicate with an identity card used as a key.

## Description

### FIELD OF THE INVENTION

The invention relates to controlling electric locks and elevator systems. Particularly the invention relates to an arrangement for triggering an elevator call by opening an offline lock.

### BACKGROUND OF THE INVENTION

Electric locks are widely used. The benefit of an electronic key is that it can be used in various locks by configuring the key and/or access control system. Furthermore, it is easy to determine which doors each of the keys registered to the system are allowed to open. Thus, every key holder may have different access rights. These access rights are controlled by online or offline system. Furthermore, if an electronic key is lost it can be cancelled without changing locks.

In an online system the lock is connected to the access control system. When a key is introduced at a lock, the lock sends a request to the access control system. The access control system sends a response. The lock is controlled according to the response. If the key holder is permitted to open the lock, the received response indicates this right. Thus, the key itself needs only a unique identifier based on which the key and the holder can be identified.

In an offline system the lock does not have data connection to the access control system. Electricity can be provided, for example, by means of electric wires or a battery. In offline solution the information regarding access rights cannot be requested from an external system. Thus, the access information must be stored to the key. This access information may be temporal. For example, the key may comprise a list of locks that can be opened and an expiration time which indicates the validity of the list entry. If the expiration time has been passed the lock cannot be opened with the key. The expiration time can be set according to the need. For example, it may be only hours or even years. In some applications the expiration time is an optional feature that is considered to improve the security of the system. In some applications, for example hotel room doors, it might be essential so that the client can open the door of the room only during the stay. In order to verify the expiration time the offline lock has been equipped with a clock. In an offline system the key needs to be reregistered in a terminal connected to an access control system at regular intervals, for example, on daily, weekly or monthly basis. Naturally the operator of the access control system is free to decide which ever interval is desired.

There is a plurality of ways controlling the validity off access authorization. For example, public key encryption methods may be used. An access authorization may be a string that has been encrypted with the public key of the lock to be opened. Correspondingly, the lock may encrypt all communication before the transmission. Encryption is used so that unauthorized parties cannot listen to the communication in order to falsify access authorizations.

The problem of the prior art is that online systems require costly network connection and because of increased electricity consumption typically also an electric connection. The problem of offline system is that the list of access rights must be updated in the key. For updating procedure the key must be taken to a terminal being capable of doing the updating. Furthermore, this terminal must be located in a location with a data connection. Thus, in some cases, for example in outdoor applications, the terminal may be located far from the actual site of the lock to be opened.

### SUMMARY

The invention discloses an arrangement, wherein an elevator can be called in advance when a person opens a door in the vicinity of the elevator and he or she is expected to use the elevator after opening the door. When the lock of the door is an offline lock and does not have data communication connection other than the communication with a key, a mobile device can be used for communicating with an access control system. The mobile device can be communicating directly with the lock. Instead of direct communication the mobile device can also communicate with an identity card used as a key.

In an embodiment an elevator is called with a mobile device suitable for sending an elevator call to an elevator system. The elevator call is done based on received lock identification. The lock identification is received from an electric offline lock. The elevator call is transmitted to a system being able to call the elevator. The elevator call may be triggered after receiving a response from the lock, however, this is not necessary as locks may be configured such that they don't send a response indicating if the lock was opened. The mobile device is used for retrieving at least one access authorization from an access control system and to store said retrieved at least one access authorization to a memory.

In an embodiment the memory is a memory of the mobile device. In the embodiment an access authorization is retrieved from the memory of the mobile device based on the lock identification. Then the access authorization is transmitted to said electric lock.

In an embodiment the above method is implemented as a computer program that is executed in a computing device, such as a mobile phone, tablet computer, or any similar device capable of executing computer software.

In an embodiment an apparatus is disclosed. The apparatus comprises a data communication connection for communicating with mobile communication network, a short distance communication connection for communicating with an external device, a processor for executing computer programs. In the embodiment the apparatus is configured to receive a lock identification from an external device by using said short distance communication connection and transmit an elevator call based on said lock identification. The apparatus is further configured to retrieve at least one access authorization from an access control system and to store said retrieved at least one access authorization to a memory by using said data communication connection. In a further embodiment the memory is a memory within the apparatus and the apparatus is further configured to retrieve an access authorization from the memory based on the lock identification and transmit the access authorization to the external device by using said short distance communication connection.

In a further embodiment of the invention the apparatus is a mobile phone, table computer or similar device and the short distance communication connection is near field communication connection. In an embodiment of the invention a server for controlling elevator calls is used. The server receives a lock identification from an apparatus as discussed above. Based on the received lock identification the server calls an elevator. In a further embodiment the server check the access rights before placing the call. If the server does not have this information itself it can send a request to an access control system and to receive a response stating if the key used has access rights to the lock and/or the elevator.

The benefit of the invention is that it provides a solution to offline lock authorization management. When the data connection of the mobile device is used for connectivity, there is no need for online connection in the lock. This provides the possibility to use simpler offline locks instead of online locks that are costly. Furthermore, the present invention facilitates better control of access rights with offline locks. It is possible to provide access authorizations with different expiration times. Instead of expiration time it is possible to configure the expiration based on the number of opening times. Furthermore, the system according to the present invention facilitates the possibility that the future authorizations are programmed in advance. For example, if a person needs an access for one day in the future, this day may be programmed before such that the authorization is sent on that day and the expiration time is set in the end of the day. The present invention thus facilitates flexible control of access rights in offline locks. In conventional systems this flexibility was available only in online systems.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Fig. 1** is a block diagram of an example embodiment, and
**Fig. 2** is a flow chart of an example embodiment of the present invention.

### DETAILED DESCRIPTION OF THE INVENTION

Reference will now be made in detail to the embodiments of the present invention, examples of which are illustrated in the accompanying drawings.

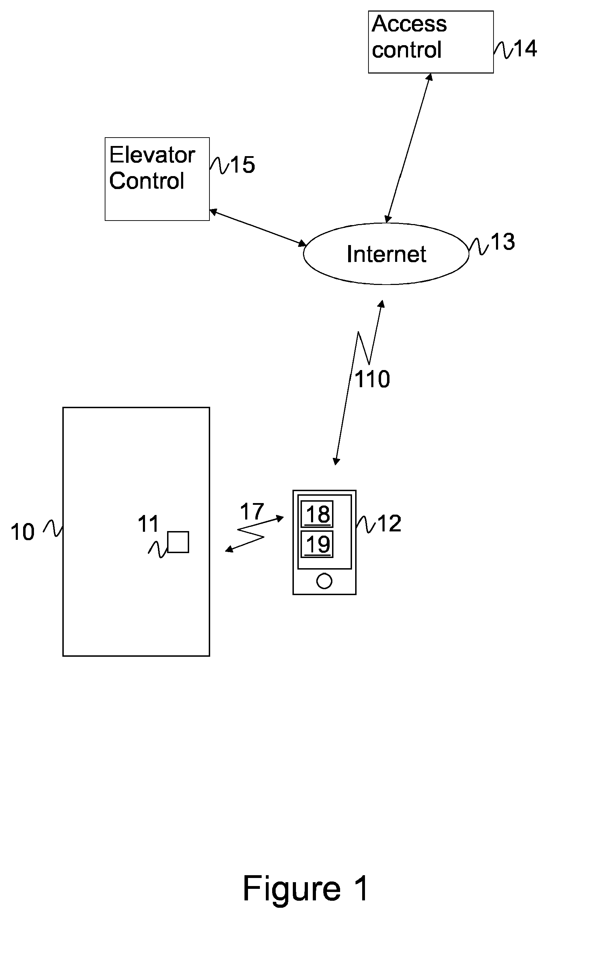

In figure 1 a block diagram of an embodiment is disclosed. In the embodiment door 10 comprises an electric lock 11. The lock is an offline lock that does not have any data connectivity to external devices other than keys that are used to control the lock. The power source of the lock may be electric wire, if available, a battery or rechargeable battery that is charged, for example, by using solar power. In the embodiment the key is implemented in a mobile device 12. The mobile device 12 communicates with the lock by using near field communication (NFC) connection 17 or other similar means of short distance communication. The mobile device 12 is connected to Internet 13 by using typical mobile packet switched communication. With the internet connection 110 the mobile device 12 is configured to communicate with the access control system 14. The communication between the mobile device and the access control system 14 is typically encrypted. The access control system 14 may include also other service functionality. The mobile device comprises a memory 18 that is configured to store all kinds of data and a processor 19 for executing a computer program for performing required acts. The data communication connection 110 to the internet may be the data connection of the mobile network, wireless local area network or any other connection that is able to communicate with other devices attached to the internet.

In an embodiment a white list of locks is stored in the memory of the mobile device 12. In this application the expression white list means a list that comprises list of locks that can be opened with the particular key. This list is continuously updated by using the internet connection of the mobile device 12. Updating may be done, for example, in regular intervals, wherein the list is requested on daily basis. It is possible that the entries on the list have an expiration time. The expiration time may be different for each entry. In an alternative embodiment there is no expiration time or the expiration time is per list basis. Per list basis expiration guarantees that the white list stored in the memory of the mobile device 12 is updated. Entries in the list are typically called access authorizations. Thus, the list does not necessarily list only locks that can be opened but also includes all data needed for opening the lock.

In an embodiment the list is updated only when expiration time for a list entry is exceeded or if access rights are changed in the access control system 14. In this case the access control system 14 initiates communication with the mobile device 12. In this embodiment the expiration time is typically set longer and the communication between the mobile device and the access control system is reduced.

In a further embodiment the mobile device 12 communicates with the access control system 14 always when a lock is opened. The communication may involve updating of the white list as discussed above or access rights may be verified in real time. For example, when the mobile device 12 is communicating with the lock 11 it receives a lock identification code. Then the mobile device 12 sends the lock identification code to the access control system 14. As a response the mobile device 12 receives an authorization for opening the lock if key holder is allowed to open the lock. The authorization is stored into memory, however, the software may be configured such that the authorization is deleted after it has been used or the expiration time is set short. Thus, in this embodiment, the access rights are verified from access control system practically every time when a door is opened. Furthermore, the authorization stored may be encrypted.

In a further embodiment the mobile device 12 is configured to communicate with additional systems, such as an elevator service system. When the mobile device 12 is used for opening a lock 11, a message to the elevator service system is sent. For example, when there is an elevator behind a door having an electric lock, the elevator may be called when the lock is opened in order to reduce waiting time. A typical example is an apartment house, in which using the key in front door would call elevator to the corresponding floor, for example, ground level or parking garage. There may be additional information regarding calling the elevator or the system may be implemented to learn using of elevator. When the person using the arrangement described above calls the elevator, the call information may include information regarding the destination floor. Thus, if the elevator system includes a destination control system, the destination floor can be included in the call. The floor information may be used also in elevator systems without destination control system so that the elevator system can serve the person as fast as possible.

In a further embodiment the offline lock 11 the mobile device 12 is configured to receive additional information from the offline lock 11. For example, the offline lock may use the data connection of the mobile device 12 to provide log-information or battery level information to the access control system 14. Thus, all information from the offline lock can be provided to the access control system 14 even if some of the persons use traditional key card instead of mobile device. In this case the information needs to be temporarily stored into the memory of the lock opened.

The functionality described above maybe combined with the access control system so that the elevator is not called if the person using the key does not have access to open the lock. Furthermore, the elevator calling functionality may be configurable. For example, the person using the key has his own control panel for configuring the key. The key holder may be allowed to configure some features attached to the key, however, in a normal case access rights are not configurable by the key holder. For example, the person may be allowed to configure if an elevator is called when he uses his key to certain lock. If the person does not need or want to use the elevator unnecessary movements can be avoided and the energy needed for moving the elevator can be saved.

In the example of figure 1 a mobile device capable of communicating with the lock is disclosed. If the mobile device does not have suitable capability it can be added with a peripheral. For example, a mobile phone may be equipped with a Bluetooth or similar short distance connectivity but the lock requires an NFC or lock specific connectivity. This can be added so that an external component is attached to the mobile phone. The external component is connected to the mobile device in such manner that component is not lost unintentionally by an accident. In other words they form one piece device. The external component can be clipped around the phone or, for example, be formed as a changeable cover part. When the additional device is in place and operating it will be able to relay the messages between the lock and mobile device.

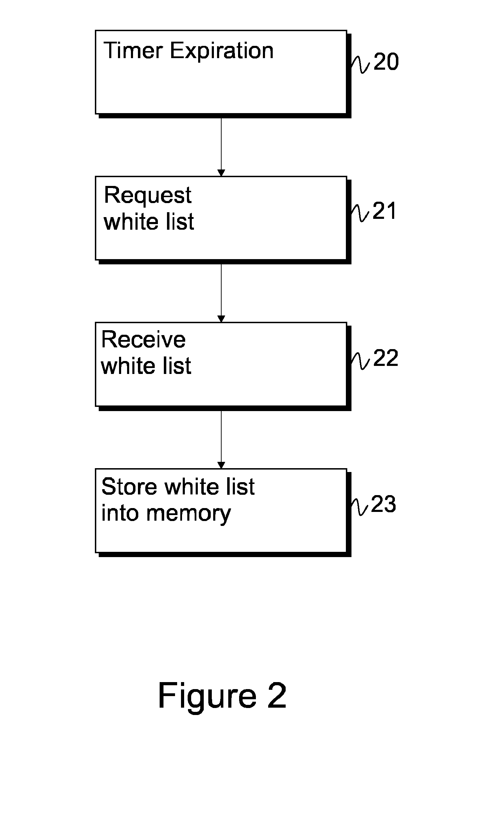

In figure 2 an example method is disclosed. In the method the mobile device, such as the mobile device of the example of Figure 1, is used. The mobile device comprises a periodical timer that is set to expire after certain period of time, for example, once a day. The method is initiated when the timer expires, step 20. Then a request of an updated white list of locks is requested from an access control system, step 21. The access control system identifies the requesting device, for example, by using a security certificate or login and password. The mobile device comprises a computer program that is configured to store this information so that it does not need to be entered every time but the process can be automated. After identification the access control system sends the white list and the mobile device receives the list, step 22. Lastly the white list is stored into memory.

In a further embodiment access authorizations are stored into an external memory that is located on identity card of the user. The identity card must be located close enough to the mobile device so that the mobile device is able to use short distance communication, such as NFC, to update the memory of the identity card that is then used as a key. The identity card is typically attached to the mobile device, for example, by using a clip. Then, when the identity card is used as a key, the mobile device can receive the same lock identification as the identity card. In an alternative embodiment the identity card is configured to relay the lock identification to the mobile device so that the mobile device can send the elevator call to the system controlling elevator calls. In the second embodiment the identity card may need further functionality that typically can be implemented as software or a computer program executed in the identity card.

The system controlling elevator calls may be the access control system or a separate system communicating with the access control system or the system may have similar functionality. The term access control system should be understood as a system that has data regarding access rights. It can be a separate system shared with a plurality of other systems, such as elevator management, door management or any other management system. It may also be integrated to any of the systems used and the systems are configured to exchange data between the systems. For example, the when a key is introduced at a lock, the elevator call may be sent, however, the elevator management system may first verify that the person who introduced the key has right to use that elevator.

In an embodiment a device controlling elevator calls and access control is used as a server for a plurality of mobile devices. The device is configured to receive a request for access authorizations from a public network, such as Internet. The device comprises access control database or has direct connection to an access control system in order to retrieve the access data in real time. A mobile device used for opening a door may have the access authorization, however, it has been initially received from the device used as a server and described above. In such cases the device may receive from a mobile device, for example, information transmitted by the lock, an update request or an elevator call. The elevator call may include, for example, the user and lock identification. Based on these the user location and preferences can be retrieved from a database of the system. The device may then be configured to verify that the person opening the lock has access authorization to make the elevator call according to the preferences. Alternatively the elevator call may be done every time or if the user has an access authorization to a lock being opened. If only lock and user identification is received, the device must check the access authorization by itself.

As discussed above in the embodiments the data connection of a mobile device is used for receiving at least one authorization for opening a lock. The form of the authorization may vary, however, it must contain the information required for opening the lock. The authorization is then send to a lock or a key card using the short distance communication connection. The lock being opened has an identification code that is received by the mobile device. Based on the identification the mobile device may determine which elevator the user of the device is wishing to use next and transmits the information to a system that is capable of verifying if the user has access rights to use that elevator. If the user has access rights, the system may perform the call by sending the call to a system managing calls. The call may include additional information, such as the destination floor.

The above mentioned method may be implemented as computer software which is executed in a computing device able to communicate with an offline lock and access control system. When the software is executed in a computing device it is configured to perform the above described inventive method. The software is embodied on a computer readable medium so that it can be provided to the computing device.

As stated above, the components of the exemplary embodiments can include computer readable medium or memories for holding instructions programmed according to the teachings of the present inventions and for holding data structures, tables, records, and/or other data described herein. Computer readable medium can include any suitable medium that participates in providing instructions to a processor for execution. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Bluray Disc, any other suitable optical medium, a RAM, a PROM, an EPROM, a FLASH-EPROM, any other suitable memory chip or cartridge, a carrier wave or any other suitable medium from which a computer can read.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method for calling an elevator with a mobile device suitable for sending an elevator call to an elevator system, which method comprises the steps of:
receiving a lock identification from an offline lock; and
transmitting an elevator call based on said lock identification; wherein said method further comprises
retrieving at least one access authorization from an access control system and storing said retrieved at least one access authorization to a memory.

2. The method according to claim 1, wherein the said memory is a memory of said mobile device and the method further comprises:
retrieving an access authorization from said memory based on said lock identification; and
transmitting said access authorization to said electric lock by said mobile device.

3. The method according to claim 1 or 2" wherein said mobile device is configured to store said retrieved access authorization temporarily.

4. The method according to claim 1 or 2, wherein said memory comprises a plurality of access authorizations.

5. The method according to any of preceding claims 1 - 4, wherein said mobile device is configured to retrieve said at least one access authorization periodically.

6. The method according any of preceding claims 1 - 5, wherein said mobile device is configured to retrieve said at least one access authorization on demand.

7. A computer program comprising code adapted to cause the method according to any of claims 1 - 8 when executed on a data-processing system.

8. An apparatus comprising
a data communication connection (110) for communicating with mobile communication network;
a short distance communication connection (17) for communicating with an external device;
a processor (19) for executing computer programs; wherein said apparatus is configured to:
receive a lock identification from an external device by using said short distance communication connection (17);and
transmit an elevator call based on said lock identification; wherein
said apparatus is further configured to retrieve at least one access authorization from an access control system and to store said retrieved at least one access authorization to a memory by using said data communication connection (110).

9. An apparatus according to claim 8, wherein the apparatus further comprises said memory (18) and is further configured to:
retrieve an access authorization from said memory (18) based on said lock identification; and
transmit said access authorization to said external device by using said short distance communication connection (17).

10. An apparatus according to claim 8, wherein said apparatus is configured to communicate with said memory with said short distance communication connection (17)

11. An apparatus according to any of preceding claims 8 - 10, wherein said external device is an offline lock (11).

12. An apparatus according to any of preceding claims 8 - 10, wherein said external device is a key card.

13. An apparatus according to any of preceding claims 8 - 12, wherein said apparatus is a mobile phone comprising near field communication connectivity.

14. A server comprising a connection to a public data communication network, wherein said server is configured to:
receive at least one lock identification by said connection to a public data communication network, wherein said lock identification;
transmit an elevator call according to the said received lock identification.

15. A server according to claim 14, wherein said server is further configured to:
transmit an access control request to an access control system based on the lock identification;
receive a response to said transmitted access control request; and
transmit said elevator call in accordance with said received response.
